# EUROPEAN PATENT SPECIFICATION

(11) **EP 1 696 689 B1**
(45) Date of publication and mention of the grant of the patent: **05.09.2007**
(21) Application number: 06250726.4
(22) Date of filing: 10.02.2006
(51) Int. Cl.: H04Q 7/38

(54) **Handover in a broadband wireless local area network**
Weiterreichen in einem drahtlosen lokalen Breitbandnetzwerk
Transfert intercellulaire dans un réseau local sans fil à bande large

(30) Priority: 25.02.2005 US 64831
(43) Date of publication of application: 30.08.2006
(73) Proprietor: Lucent Technologies, Inc., Murray Hill, NJ 07974-0636 (US)
(72) Inventor: Leung, Kin K., London SW7 2BT (GB); Mukherjee, Sayandev, Plainsboro, New Jersey 08536 (US); Rittenhouse, Geroge E., Holmdel, New Jersey 07733 (US)
(74) Representative: Sarup, David Alexander

(56) References cited:
- EP-A- 1 458 210
- US-B1- 6 400 951
- IEEE: "IEEE Standard for local metropolitan area networks, Part 16: Air Interface for Fixed Broadband Wireless Access Systems" IEEE STD. 802.16-2004, 1 October 2004 (2004-10-01), pages 1-75, XP002373386
- SOHYUN KIM ET AL: "Overall HO procedures for IEEE 802.16" IEEE C802.16E-03/47, XX, XX, 4 September 2003 (2003-09-04), pages 1-15, XP002334169

## Description

### BACKGROUND OF THE INVENTION

### 1. Field of the Invention

The present invention relates to mobility support in wireless networks.

### 2. Description of the Related Art

Wireless local-area-networks (WLAN) based on IEEE 802.11 standards have been widely deployed and used in airports, offices and homes. Building on this success, the IEEE 802.16 standard specifies the air interface and medium-access-control (MAC) protocol for wireless metropolitan area networks (MANs). IEEE 802.16 may enable broadband wireless access to buildings through external antennas communicating with radio base stations (BSs). The wireless MAN offers an alternative to a fiber optic link, a cable modem, and/or a digital subscriber loop. Using the new standard, home and business users may be connected via radio links directly to telecommunication networks and the Internet. Two documents related to wireless networks are US Patent No. 6,400,951 to VAARA and EP Patent Application 1 458 210 A1 to KOO ET AL. VAARA discusses handover and call setup in a mobile communication system, while KOO ET AL. discusses a handoff system using an initial ranging scheme in a broadband wireless access communication system.

To overcome the disadvantage of the line-of-sight requirement between transmitters and receivers in the 802.16 standard, the 802.16a standard was approved in 2003 to support non-line-of-sight links. 802.16a is operational in both licensed and unlicensed frequency bands from 2 to 11 GHz. Minor revisions were made to the 802.16a standard to create the 802.16d standard. The 802.16d standard is an alternative for providing last-mile connectivity by radio link. Many 802.16d products are being actively developed and tested. The 802.16d specification was devised to provide a connection exclusively for fixed wireless users. The 802.16e committee was formed with the goal of extending the 802.16d standard to support mobile terminals. However, the 802.16e is an entirely new specification that is not compatible with the 802.16d standard. As a result, legacy 802.16d products will not be supported on 802.16e wireless networks.

Methods according to the present invention are set out in the independent claims, to which the reader is now preferred. Preferred features are laid out in the dependent claims.

### SUMMARY OF THE INVENTION

In one exemplary embodiment of the present invention, a subscriber station sends a first message in order to request a handoff. A first base station receives the first message and interprets the first message as a request for handoff. The first base station sends an acknowledgment in response to the request and at least one second message in support of the handoff. The subscriber station initiates handoff with a second base station after receipt of the acknowledgment. The second base station receives the sent second message and initializes a connection handoff with the subscriber station requiring less steps than set forth in a wireless communication protocol associated with a wireless network including the subscriber station and first and second base stations.

As will be appreciated, this methodology of establishing a handoff protocol allows mobility support to be provided where mobility is not intended to be supported by the wireless communication protocol.

### BRIEF DESCRIPTION OF THE DRAWINGS

The present invention will become more fully understood from the detailed description given herein below and the accompanying drawings which are given by way of illustration only, wherein like reference numerals designate corresponding parts in the various drawings, and wherein:

Figure 1 illustrates an architecture of a hierarchical mobile IP (HMIP) for a 802.16d wireless network according to an exemplary embodiment of the present invention.

Figure 2 illustrates steps in a conventional initialization process for a connection set up according to 802.16d standards.

Figure 3 illustrates steps in a handoff initialization process for a connection set up according to an exemplary embodiment of the present invention.

Figure 4 illustrates a sequence of message exchanges during a connection handoff according to an exemplary embodiment of the present invention.

### DETAILED DESCRIPTION OF THE EMBODIMENTS

To better understand the present invention, the objective of connection handoff, application of certain functionalities defined in the 802.16d standard for connection handoff, and handoff protocols will be explained. Then, an existing message in the 802.16d standard that may be used to enable handoff will be identified and explained.

### PROTOCOLS FOR CONNECTION HANDOFF

### Handoff Objective and Mobility Management

As the quality of an established radio link between a subscriber station (SS) (or terminal) and its base station (BS) deteriorates due to mobility, the IP connectivity between the SS and the corresponding host may be maintained by handing off the connection to a BS with a stronger radio link (connection). The resultant connection of a handoff may reduce packet loss and delay.

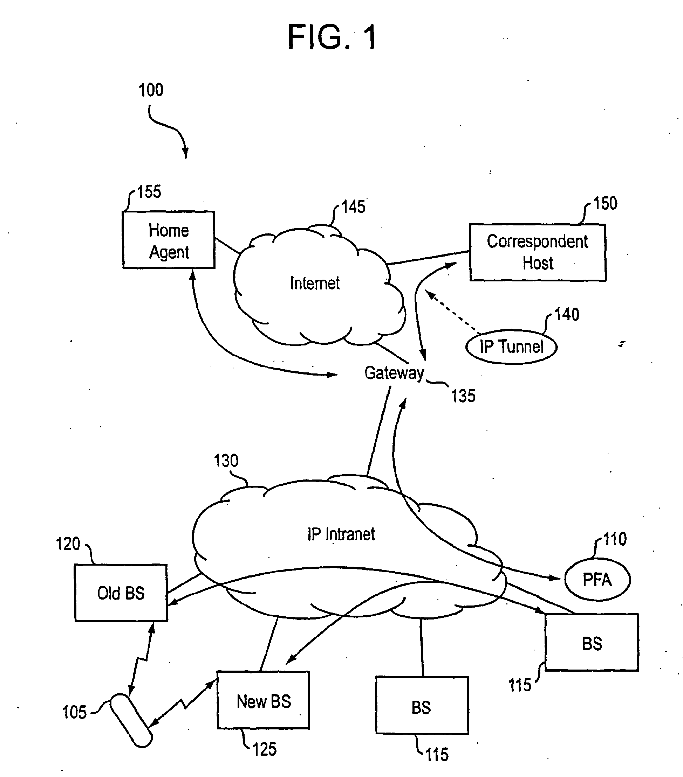

The 802.16d standard defines only the physical (PHY) and MAC layers. Accordingly, for the purposes of an example description, assume that the network under consideration employs a hierarchical mobile IP (HMIP) algorithm for micro-mobility management. It should be understood that the present invention is not limited to this example. For example the network may instead employ algorithms such as cellular IP, HAWAII, etc. The example will be further described below with reference to Figure 1.

Figure 1 illustrates an architecture of the HMIP for a 802.16d wireless network 100 according to an exemplary embodiment of the present invention. As shown, a router is designated as a Primary Foreign Agent (PFA) 110 and serves as the "anchor point" for each SS 105. That is, data exchanged to and from a given SS 105 is routed through the corresponding PFA 110. In addition, the PFA 110 also keeps track of the operational parameters for the 802.16d connections associated with the SS 105. The communication path between the SS 105 and a correspondent host 150 may include an IP Intranet 130, a gateway 135, a plurality of IP tunnels 140, an internet connection 145, and/or a home agent 155. The PFA 110 may be alternatively co-located at a BS 115.

### Initialization Process

In order to support legacy 802.16d devices while providing mobility in a 802.16d wireless network, the features and protocols defined in the existing 802.16d standard are used. Conceptually, handoff refers to a process of eliminating an existing connection with an an old BS 120 and setting up a new connection with a neighboring BS, new BS 125, with better link quality.

Establishing a handoff connection is similar to the initialization process of the SS 105 when registering with a BS (referred to as "old BS 120") upon power up. The initialization process of an initial registering of the SS 105 with the old BS 120 will be described, followed by a description of a handoff initialization between the SS 105 and a new BS 125.

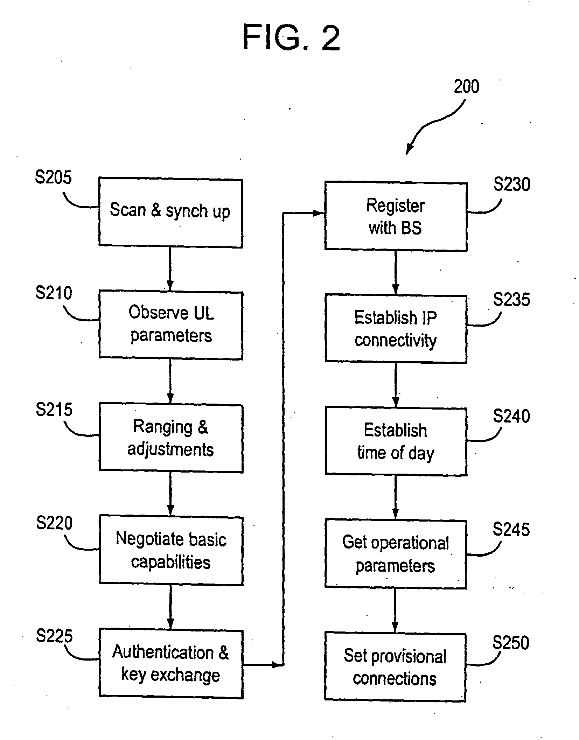

Figure 2 illustrates steps in the well-known initialization process 200 for a connection set up according to 802.16d standards. As shown, in step S205, an SS 105 begins scanning its frequency list to identify an operating channel. Alternatively, in step S205, the SS 105 may log on to (e.g., connect to) a predetermined BS 120. After selecting a channel on which to attempt communication, the SS 105 tries to synchronize to the downlink transmission by detecting the periodic frame preambles.

Once the physical layer is synchronized in step S205, the SS 105 in step S210 looks for the periodically broadcast downlink channel descriptor (DCD) and uplink channel descriptor (UCD) messages, from which the SS 105 may ascertain the modulation and forward-error-control information for the selected channel.

In step S215, with the channel parameters established in step s210, the SS 105 identifies a transmission opportunity from the uplink (UL) MAP to send ranging message(s) to the target BS 120. Based on the range-response message from the BS 120, the SS 105 may adjust its transmission power and timing. Furthermore, the message also provides the SS 105 with the basic and primary management connection identities (CIDs).

In step S220, after the ranging process of step S215 is completed, the SS 105 and BS 120 exchange two messages, one from each of the SS 105 and the BS 120, to inform each other of their capabilities.

In step S225, the SS 105 proceeds through the authentication procedure and exchange of encryption keys with the BS 120. This procedure includes several messages exchanged between the SS 105 and BS 120. Step S225 starts with the SS 105 sending its X.502 digital certificate (i.e., MAC address and SS public key), cryptographic algorithm and basic CID to the BS 120. Step S225 concludes when both the SS 105 and the BS 120 agree upon the authorization and traffic-encryption keys and their associated lifetimes.

In step S230, the SS 105 sends the BS 120 a request message to register with the network. The BS 120 returns a response message to indicate success or failure of the registration and, if successful, a secondary management CID. Then, the SS 105 acquires an IP address and related parameters via the dynamic host communication protocol (DHCP).

In step S235, the SS 105 sends a request for time and receives a response from a time server. The DHCP server also provides the address of the TFTP (Trivial File Transfer Protocol) server from which the SS 105 may obtain a configuration file containing operational parameters. Connections are set up for service flows between the SS 105 and BS 120.

There are various methods to set up the above-described connections for the service flows. According to one method, the BS 120 sends a dynamic service addition (DSA) message to the SS 105. The request message may include service flow IDs and/or CIDs and their QoS parameters. The connection setup is completed after the SS 105 returns a DSA response to the BS 120 and the BS 120 sends an acknowledgment.

### Handoff Initialization Process

The steps required for initialization of a connection during handoff according to an exemplary embodiment of the present invention will now be described.

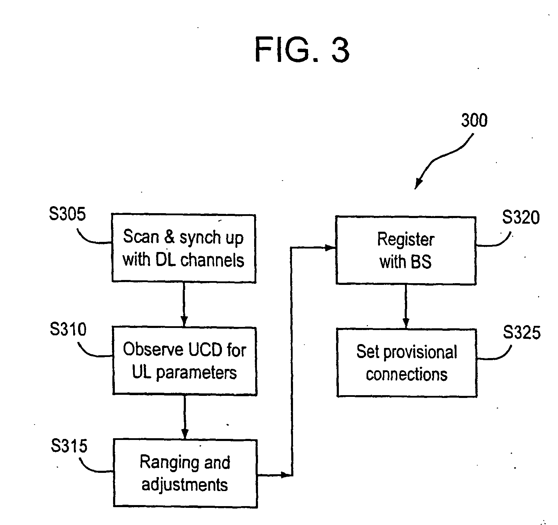

Figure 3 illustrates steps in a handoff initialization process 300 for a connection set up according to an exemplary embodiment of the present invention. As shown, the handoff initialization process 300 requires fewer steps than the initialization process 200 of Figure 2.

Figure 3 includes steps S305, S310, S315, S320 and S325, which correspond generally to steps S205, S210, S215, S230 and S250, respectively, of Figure 2. The reasons why the additional steps (e.g., steps S220, S225, S235, S240, S245) of Figure 2 are not required in the handoff initialization process 300 will now be described.

The example of the handoff initialization process 300 will now be given with respect to the network of Figure 1. In this example, it is assumed that there exists a current connection between the SS 105 and the BS 120 (e.g., established as described above with reference to Figure 2). It is further assumed that the old BS 120 and the new BS 125 have identical capabilities. Thus, step S220 (i.e., negotiation of basic capabilities) of Figure 2 need not be repeated in the handoff process. Step S225 (i.e., user authentication) may be achieved by an exchange of control messages in the backhaul network between the old BS 120 and the new BS 125, eliminating the need for authentication to be established between the SS 105 and the new BS 125. Encryption keys and their associated parameters may be forwarded from the old BS 120 to the new BS 125 via the backhaul network as well. An example of how authentication and forwarding of encryption keys may be executed via the backhaul network will be described later.

Furthermore, since the same IP connectivity is maintained by use of HMIP in spite of handoff, a new IP connection does not need to be re-established during handoff. Thus, the step S235 is not required in the handoff initialization process 300. Since the existing IP connection remains unchanged, there is no need for the SS 105 to receive new operational parameters as described with respect to step S245 of Figure 2, and step S245 need not be repeated in the handoff initialization process 300.

Another assumption which may be made is that the old BS 120 and the new BS 125 are synchronized (e.g., by the Global Positioning System (GPS)). Thus, the step S240 of Figure 2 (i.e., establishing the time of day) is no longer necessary with respect to the handoff initialization process 300 of Figure 3.

Figure 3 illustrates the resultant process required for handoff in 802.16d networks according to an exemplary embodiment of the present invention in view of the above-described assumptions.

As described above, the handoff initialization process 300 requires less communication between the SS 105 and the new BS 125. It is generally understood that backhaul communication has less latency than over-the-air communication between the SS 105 and the BS 125. Thus, the handoff initialization process 300 may require less time as compared to the initialization process 200 of Figure 2.

An example estimation of the latency for the handoff initialization process 300 of Figure 3 will now be described. Table 1 shows the messages involved in the functionalities and their estimated latency by assuming: 1) 7 msec per frame (which is a medium frame length); 2) transmission of DCD and UCD every 5 frames; and 3) messages can be processed and responding messages can be sent in the next frame. It is understood that the delay incurred in channel synchronization and observation of UL parameters (as shown in Table 1) may be further reduced if a second radio chain is used to observe Us parameters.

**Table 1**

| Functions (and corresponding steps with respect to Figure 3) | Message exchanged | | Delay (for 7 ms/frame) | |
|---|---|---|---|---|
| | SS | BS | Number of frames | msec |
| Synch up with DL channels (Step 305) | - | - | 5 | 35 |
| Observe UL parameters (Step 310) | - | - | 5 | 35 |
| Ranging & adjustments (Step 315) | 2x RNG-REQ | 2x RNG-RSP | 4 | 28 |
| Register with BS (Step 320) | REG-REQ | REQ-RSP | 2 | 14 |
| Set provisional connections (Step 325) | DSA- RSP | DSA-REQ. DSA-ACK | 3 | 21 |
| Total handoff latency | | | 19 | 133 |

### Handoff Protocol and Message Exchanges

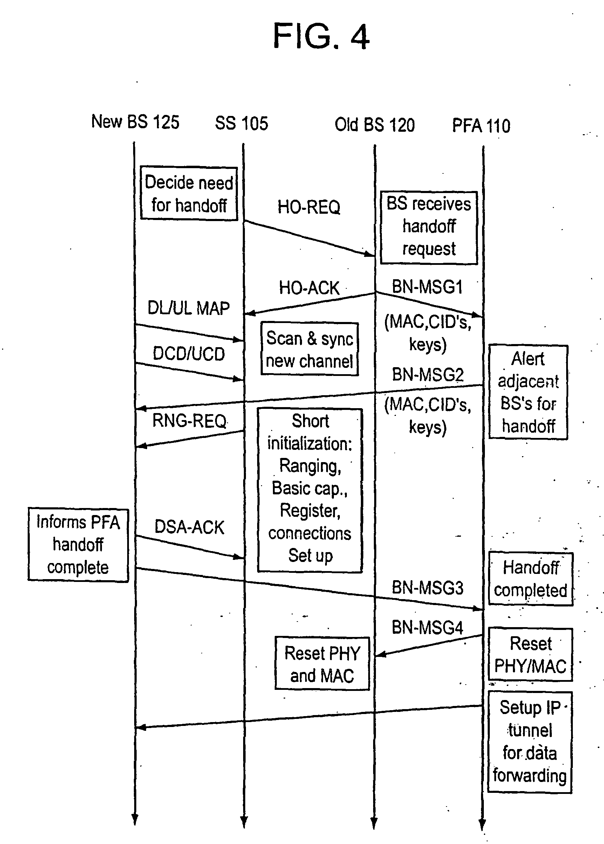

Figure 4 illustrates a sequence of message exchanges during a connection handoff according to an exemplary embodiment of the present invention. As shown in the example of Figure 4, the SS 105 initiates the connection handoff when the SS 105 requires a connection handoff (e.g., by checking an error rate for the MAPs periodically broadcast from BS on the downlink or by measuring the received signal strength), the SS 105 sends a handoff request (HO-REQ) to its current BS (e.g., the old BS 120). The old BS 120 sends a handoff acknowledgment (HO-ACK) message to signify that the SS 105 may start the handoff process.

The SS 105 starts a timer after sending the HO-REQ to the old BS 120. The SS 105 treats a received HO-ACK message as an indication to start a handoff until the timer reaches a given threshold level (referred to as a time out). When the timer reaches the given threshold level without first receiving the HO-ACK from the old BS 120, the SS 105 no longer interprets a received HO-ACK as a precursor to a connection handoff.

Both the HO-REQ and HO-ACK messages are not defined in the 802.16d standard. Instead, the messages are labeled as such for descriptive purposes. An example implementation of these messages using existing 802.16d messages will be described in detail below in the Use of Existing Message to Request and ACK Handoff Section.

After the old BS 120 responds to the request for handoff from the SS 105, the old BS 120 sends a first backhaul network message BN-MSG1 to inform the PFA 110, which is the "anchor" point for the SS 105, of the MAC address, CIDs, encryption keys and/or other service parameters associated with the SS 105. Upon receiving the BN-MSG1, the PFA forwards second backhaul network messages BN-MSG2, which includes information about the MAC address, connections and operational parameters of the SS 105, via the backhaul network to alert all BSs 115/ 125 surrounding the old BS 120, to enable a response to a possible handoff of the SS 105. The list of neighboring BSs 115/125, which are the likely candidates for handoff with the SS 105, is maintained at the PFA 110, and may be considered analogous to the neighbor list in CDMA systems.

Following the reception of the HO-ACK message, the SS 105 proceeds to execute the handoff initialization process 300 as described above with respect to Figure 3. Thus, the SS 105 scans and synchronizes with a new channel of the new BS 125 (e.g., as describe above with respect to step S305 of Figure 3). Then, the SS 105 obtains the uplink transmission parameters (e.g., as above described with respect to step S310 of Figure 3), completes the ranging and adjustment procedure (e.g., as described above with respect to step S315 of Figure 3), registers and sets up provisional connections with the new BS 125 (as described above with respect to steps S320 and S325 of Figure 3). Once the handoff initialization process 300 is completed, the new BS 125 sends a third backhaul network message BN-MSG3 to inform the PFA 110 of the completion of the handoff. The PFA 110 sends a fourth backhaul network message BN-MSG4 to reset PHY and MAC associated with the SS 105 on the old BS 120. As the new connections are established between the SS 105 and the new BS 125, the PFA 110 starts to tunnel data to the new BS 125 for forwarding to the SS 105.

In the above-described embodiment, the BN-MSG2 sent from the PFA 110 may be received and processed by all BSs 115/125 surrounding the old BS 120 before the first ranging message RNG-REQ from the SS 105 arrives. If the BN-MSG2 message is not received, the neighboring BSs 115/125 will not be aware of the handoff, and thus the "normal" initialization process (e.g., initialization process 200 of Figure 2) will be executed, instead of the reduced handoff initialization process (e.g., handoff initialization process 300 of Figure 3).

### Use of Existing Message to Request and ACK Handoff

As discussed above, the HO-REQ and HO-ACK messages are not defined in the 802.16d standard. In order to avoid a change to the standard, an existing message, namely the De-registration Command (DREG-CMD) with an action code of 03, may represent the HO-REQ and HO-ACK messages. In other words, when the SS 105 initiates the handoff, the SS 105 sends a DREG-CMD (code=03) message (i.e., HO-REQ) to the old BS 120. If the old BS 120 agrees to the handoff, it returns another DREG-CMD (code=03) (i.e., HO-ACK) to the SS 105. When the HO-ACK is received by the SS 105, the handoff process begins as described above with respect to Figure 4.

Reasons for the applicability of the DREG-CMD (code=03) message as the HO-REQ and HO-ACK messages will now be described. The 802.16d standard specifies that the DREG-CMD message shall be transmitted by the BS on an SS's basic CID to force the SS to change its access state. Upon receiving a DREG-CMD, the SS shall take the action indicated by the action code. If the action code is 03 (code=03), the SS shall return to normal operation and may transmit on any of its active connections

The old BS 120 does not expect to receive the DREG-CMD (code=03) message from its associated SSs 105. If the DREG-CMD (code=03) message is received at the old BS 120, the response of the old BS 120 to the message has not been specified in the 802.16d standard. Thus, a BS according to an exemplary embodiment of the present invention may be configured to interpret the DREG-CMD (code=03) message as a request for handoff (HO-REQ). Likewise,a SS according to an exemplary embodiment of the present invention may be configured to send the DREG-CMD (code=03) as the request for handoff (HO-REQ). Thus, after the SS 105 sends the first DREG-CMD (code=03) message, the SS 105 intends to begin a handoff, and may interpret the returned DREG-CMD (code=03) from the old BS 120 as an acknowledgment to the handoff request (HO-ACK).

The choice of the DREG-CMD (code=03) message may have an additional advantage; namely, the DREG-CMD (code=03) message simply asks the SS 105 to resume normal operations. Thus, the DREG-CMD (code=03) message does not cause any adverse effects to an SS not configured for handoff and/or not currently expecting a handoff acknowledgment (HO-ACK) from the old BS 120. The DREQ-CMD (code-03) message may also enable correct operation for a wireless network including mixed SSs 105 and BSs 115/ 120/ 125 with or without the new handoff capability. For example, suppose that the SS 105 is configured so as to include the above-described handoff capability, but the old BS 120 does not include the handoff capability. In this case, after receiving the first DREG-CMD (code=03) from the SS 105, the old BS 120 will not send the second DREG-CMD (code=03) to acknowledge (or approve) the handoff. Without the returned DREG-CMD (code=03), the SS 105 simply continues its operations as defined in the 802.16d standard. Thus, the above-described methodologies may be implemented in current 802.16d networks without adversely affecting the operation of the existing network.

In order to prevent "ping-ponging" of the SS 105 between the old BS 120 and the new BS 125, a conventional hysteresis threshold may be employed, such that a handoff will only be requested by the SS 105 if the received signal strength from the new BS 125 exceeds that from the old BS 120 by at least the hysteresis threshold. Since the above described handoff methodologies include a "short" version of the initialization process (e.g., handoff initialization process 300), the SS 105 may abort the handoff at any stage before the MAC and PHY are reset at the old BS 120 with the BN-MSG4 from the PFA 110 in Figure 4 by sending another DREG-CMD (code=03) to the old BS 120.

The exemplary embodiments of the present invention being thus described, it will be obvious that the same may be varied in many ways. For example, other commands within the 802.16d standard may be used to represent the HO-REQ and HO-ACK messages. Further, while above-described exemplary embodiments have been described with respect to a HMIP management system, other exemplary embodiments of the present invention may include any well-known management system. Further, while above-described embodiments have been given with reference to 802.16d, the exemplary embodiments of the present invention may be applied to other wireless communication protocols (e.g., 802.16a). Such variations are not to be regarded as a departure from the scope of the exemplary embodiments of the invention, and all such modifications as would be obvious to one skilled in the art are intended to be included within the scope of the following claims.

## Claims

1. A method of supporting mobility in a wireless network operating according to a wireless communication protocol, comprising:
receiving, at a first base station, a first message set forth in the wireless communication protocol, the wireless communication protocol providing the message for a purpose other than supporting mobility;
interpreting, at the first base station, the first message as a request for handoff; and
sending, in response to the first message, a second message in support of the interpreted handoff request, the second message includes an acknowledgement of the request for handoff, and sending a request to initialize a handoff connection.

2. The method of claim 1, wherein the sent message includes information associated with a connection between a first base station and a subscriber station.

3. The method of claim 2 or 8, wherein the information includes at least one of a medium-access-control (MAC) address, a connection identity (CID) and an encryption key.

4. The method of claim 1, 6 or 8, wherein the wireless communication protocol is one of IEEE 802.16a and 802.16d standards.

5. The method of claim 4, wherein at least one of the received and sent messages is a DREG-CMD (code=03) message.

6. A method of supporting mobility in a wireless network operating according to a wireless communication protocol, comprising:
receiving, at a second base station, at least one message in support of an interpreted handoff request;
receiving, at the second base station, a request to initialize a handoff connection; and
initializing the handoff connection using the received message, while not performing at least one of the steps of the wireless communication protocol directed to negotiating basic capabilities (S220), authentication & key exchange (S225), establishing IP connectivity (S235), establishing time of day (S240), and getting operational parameters (S245).

7. The method of claim 6, wherein the received message includes information associated with a connection between a first base station and [a] the subscriber station.

8. A method of supporting mobility in a wireless network operating according to a wireless communication protocol, comprising:
sending, from a subscriber station, a first message set forth in the wireless communication protocol, the wireless communication protocol providing the first message for a purpose other than supporting mobility, the first message representing a request-for handoff;
receiving, at the subscriber station, a second message set forth in the wireless communication protocol, the wireless communication protocol providing the second message for a purpose other than supporting mobility; and
interpreting the second message, at the subscriber station, as an acknowledgment of a request for handoff signified by the first message.

9. The method of claim 8, further comprising:
starting a timer after sending the first message, the second message not being interpreted as an acknowledgment when the second message is received after the timer times out.

## Patentansprüche

1. Verfahren zur Unterstützung von Mobilität in einem nach einem drahtlosen Kommunikationsprotokoll betriebenen drahtlosen Netz, aufweisend:
Empfangen einer in dem drahtlosen Kommunikationsprotokoll angegebenen ersten Nachricht an einer ersten Basisstation, wobei das drahtlose Kommunikationsprotokoll die Nachricht für einen anderen Zweck als zur Unterstützung von Mobilität bereitstellt;
Interpretieren der ersten Nachricht an der ersten Basisstation als eine Anforderung für Handoff; und
Senden einer zweiten Nachricht in Antwort auf die erste Nachricht zur Unterstützung der interpretierten Handoff-Anforderung, wobei die zweite Nachricht eine Bestätigung der Anforderung für Handoff beinhaltet, und Senden einer Anforderung, eine Handoff-Verbindung zu initialisieren.

2. Verfahren nach Anspruch 1, wobei die gesendete Nachricht Information beinhaltet, die mit einer Verbindung zwischen einer ersten Basisstation und einer Teilnehmerstation verknüpft ist.

3. Verfahren nach Anspruch 2 oder 8, wobei die Information mindestens eine MAC-Adresse (MAC = Medium Access Control), eine Verbindungs-Kennung (CID) und einen Verschlüsselungsschlüssel beinhaltet.

4. Verfahren nach Anspruch 1, 6 oder 8, wobei das drahtlose Kommunikationsprotokoll einer der IEEE Standards 802.16a oder 802.16d ist.

5. Verfahren nach Anspruch 4, wobei mindestens eine der empfangenen und gesendeten Nachrichten eine DREG-CMD (Code=03) Nachricht ist.

6. Verfahren zur Unterstützung von Mobilität in einem drahtlosen Netz, welches nach einem drahtlosen Kommunikationsprotokoll betrieben wird, aufweisend:
Empfangen mindestens einer Nachricht an einer zweiten Basisstation zur Unterstützung einer interpretierten Handoff-Anforderung:
Empfangen einer Anforderung an der zweiten Basisstation zur Initialisierung einer Handoff-Verbindung; und
Initialisieren der Handoff-Verbindung unter Einsatz der empfangenen Nachricht bei Nicht-Durchführung mindestens einer der Schritte des drahtlosen Kommunikationsprotokolls, das zur Verhandlung von grundlegenden Leistungen (S220), Authentifizierung und Schlüsselaustausch (S225), Einrichten der IP Konnektivität (S235), Einrichten der Uhrzeit (S240) und Einholen der Betriebsparameter (S245) dient.

7. Verfahren nach Anspruch 6, wobei die empfangene Nachricht Information beinhaltet, die mit einer Verbindung zwischen einer ersten Basisstation und
[a] der Teilnehmerstation verknüpft ist.

8. Verfahren zur Unterstützung der Mobilität in einem drahtlosen Netz, das nach einem drahtlosen Kommunikationsprotokoll betrieben wird, aufweisend:
Senden einer in dem drahtlosen Kommunikationsprotokoll angegebenen ersten Nachricht von einer Teilnehmerstation, wobei das drahtlose Kommunikationsprotokoll die erste Nachricht für einen anderen Zweck als zur Unterstützung der Mobilität bereitstellt, und die erste Nachricht eine Anforderung für Handoff darstellt;
Empfangen einer in dem drahtlosen Kommunikationsprotokoll angegebenen zweiten Nachricht an der Teilnehmerstation, wobei das drahtlose Kommunikationsprotokoll die zweite Nachricht für einen anderen Zweck als zur Unterstützung der Mobilität bereitstellt; und
Interpretieren der zweiten Nachricht an der Teilnehmerstation als Bestätigung einer Anforderung für Handoff entsprechend der ersten Nachricht.

9. Verfahren nach Anspruch 8, weiterhin aufweisend:
Starten eines Timers nach Senden der ersten Nachricht, wobei die zweite Nachricht nicht als Bestätigung interpretiert wird, wenn die zweite Nachricht nach Ablaufen des Timers empfangen wird.

## Revendications

1. Procédé de support de la mobilité dans un réseau sans fil fonctionnant conformément à un protocole de communication sans fil, comprenant :
la réception, au niveau d'une première station de base, d'un premier message selon un premier protocole de communication sans fil, le protocole de communication sans fil fournissant le message à une fin autre que le support de mobilité ;
l'interprétation, au niveau de la première station de base, du premier message comme une requête de transfert ; et
l'envoi, en réponse au premier message, d'un second message à l'appui de la requête de transfert interprétée, le second message comportant un acquittement de la requête de transfert, et l'envoi d'une requête d'initialisation d'une connexion de transfert.

2. Procédé selon la revendication 1, dans lequel le message envoyé comporte des informations associées à une connexion entre une première station de base et un poste d'abonné.

3. Procédé selon la revendication 2 ou 8, dans lequel les informations comportent au moins l'une d'une adresse de commande d'accès au support (MAC), d'une identité de connexion (CID) et d'une clé de cryptage.

4. Procédé selon la revendication 1, 6 ou 8, dans lequel le protocole de communication sans fil est l'un des standards IEEE 802.16a et 802.16d.

5. Procédé selon la revendication 4, dans lequel au moins un des messages envoyés et reçus est un message DREG-CMD (code = 03).

6. Procédé de support de la mobilité dans un réseau sans fil fonctionnant conformément à un protocole de communication sans fil, comprenant :
la réception, au niveau d'une seconde station de base, d'au moins un message à l'appui d'une requête de transfert interprétée ;
la réception au niveau de la seconde station de base, d'une requête d'initialisation d'une connexion de transfert ; et
l'initialisation de la connexion de transfert au moyen du message reçu, pendant la non-exécution d'au moins l'une des étapes du protocole de communication sans fil portant sur la négociation de capabilités de base (5220), d'authentification et échange de clé (5225), d'établissement de la connectivité IP (S235) d'établissement de l'heure locale (S240) et d'obtention de paramètres opérationnels (S245).

7. Procédé selon la revendication 6, dans lequel le message reçu comporte des informations associées à une connexion entre une première station de base et [a] le poste d'abonné.

8. Procédé de support de la mobilité dans un réseau sans fil fonctionnant conformément à un protocole de communication sans fil, comprenant :
l'envoi, par un poste d'abonné, d'un premier message selon un premier protocole de communication sans fil, le protocole de communication sans fil fournissant le premier message à une fin autre que le support de mobilité, le premier message représentant une requête de transfert ;
la réception, au niveau du poste d'abonné, d'un second message selon le protocole de communication sans fil, le protocole de communication sans fil fournissant le second message à une fin autre que le support de mobilité ; et
l'interprétation du second message, au niveau du poste d'abonné, comme un acquittement d'une requête de transfert signifiée par le premier message.

9. Procédé selon la revendication 8, comprenant en outre :
la mise en marche d'une temporisation après l'envoi du premier message, le second message n'étant pas interprété comme un acquittement quand le second message est reçu après l'arrivée à échéance de la temporisation.
